# EUROPEAN PATENT SPECIFICATION

(11) **EP 1 784 359 B1**
(45) Date of publication and mention of the grant of the patent: **08.09.2010**
(21) Application number: 05767070.5
(22) Date of filing: 19.07.2005
(51) Int. Cl.: C01G 25/00, C01F 17/00

(54) **YTTRIUM-ZIRCONIUM MIXED OXIDE POWDER**
YTTRIUM-ZIRKONIUM-MISCHOXIDPULVER
POUDRE D'OXYDE MIXTE D'YTTRIUM ET DE ZIRCONIUM

(30) Priority: 12.08.2004 DE 102004039139
(43) Date of publication of application: 16.05.2007
(73) Proprietor: Evonik Degussa GmbH, 45128 Essen (DE)
(72) Inventor: KATUSIC, Stipan, 65779 Kelkheim (DE); KRÄMER, Michael, 61137 Schöneck-Kilianstädten (DE); MIESS, Horst, 63791 Kahl (DE); HENNIG, Thomas, 63571 Gelnhausen (DE); KRESS, Peter, 63791 Karlstein (DE)
(86) International application number: PCT/EP2005/007822
(87) International publication number: WO 2006/015692

(56) References cited:
- EP-A- 1 142 830
- US-A- 5 599 511
- US-A1- 2003 101 659
- GRABIS J ET AL: "PREPARATION OF NANOCRYSTALLINE YSZ POWDERS BY THE PLASMA TECHNIQUE" JOURNAL OF MATERIALS SCIENCE, SPRINGER / BUSINESS MEDIA, DORDRECHT, NL, vol. 33, no. 3, 1 February 1998 (1998-02-01), pages 723-728, XP000733022 ISSN: 0022-2461

## Description

The invention relates to an yttrium-zirconium mixed oxide powder, to its preparation and use.

Depending on the temperature, zirconium oxide can be present in the three crystallographic structures monoclinic, tetragonal and cubic.

Starting from a melt, cubic crystals form at about 2680°C and assume a tetragonal structure at about 2370°C. The change from the tetragonal to the monoclinic phase takes place at about 1170°C and is accompanied by an increase in volume of approximately from 3 to 5 percent. This increase in volume can lead to stresses and cracks in structural components that are produced above the tetragonal/- monoclinic transition temperature.

It is possible to suppress the phase transition by stabilising the tetragonal structure of the zirconium oxide by doping with yttrium oxide, calcium oxide, cerium oxide or magnesium oxide.

Yttrium-stabilised, tetragonal zirconium oxide is understood as being a zirconium oxide doped with about 3 mol.% yttrium oxide. Partially yttrium-stabilised zirconium oxide is understood as being a zirconium oxide that is doped with approximately from 3 to 8 mol.% yttrium and consists of a cubic matrix with tetragonal inclusions. A fully yttrium-stabilised zirconium oxide is understood as being a zirconium oxide that is doped with about 8 mol.% yttrium and has a cubic crystal structure.

Yttrium-stabilised zirconium oxide can be obtained, for example, by the wet-chemical method and by pyrogenic reactions.

US 6703334 describes a process for the preparation of yttrium-stabilised zirconium oxide powder which has a tetragonal and/or a cubic crystal structure, in which process zirconium carbonate particles and an yttrium compound are reacted together, wherein the two reaction partners are solid, one is solid and one is liquid or one is solid and one is gaseous, and the resulting product is then calcined. No information is given regarding the particle size and the specific surface area of the yttrium-stabilised zirconium oxide powder that is produced.

US 5155071 claims a partially yttrium-stabilised zirconium oxide powder which is in the form of aggregated primary particles, the aggregates having a mean diameter of less than 150 nm and the yttrium being homogeneously distributed in the zirconium oxide. The partially yttrium-stabilised zirconium oxide powder is prepared by combustion of a homogeneous mixture consisting of a zirconium precursor and an yttrium precursor. An important feature is that the process is carried out at a temperature at which the zirconium oxide precursor, generally zirconium tetrachloride, is vaporisable but the yttrium precursor is not. The yttrium precursor is accordingly fed to the combustion in solid form. A disadvantage of this process is that powders having only a small BET surface area are obtained. In addition, it has been found that the distribution of the yttrium is not homogeneous, but regions of differing yttrium concentrations are present. Furthermore, no information is given regarding the sintering behaviour of the partially yttrium-stabilised zirconium oxide powder.

Böer et al. (Freiberger Forschungsheft 1998, A841, pages 281 to 295) describe an yttrium-stabilised zirconium oxide obtained by spraying a homogeneous solution of zirconium alkoxides with yttrium(II) acetylacetonate into an oxyhydrogen flame with a very high oxygen excess and very short residence times in the flame (about 1 ms). Depending on the yttrium content, a tetragonal or cubic zirconium oxide in the form of spherical particles having a BET surface area of 30 m²/g is obtained. The process is not economical owing to the high oxygen excess and the expensive yttrium precursor.

Juarez et al. (Journal of the European Ceramic Society 20 (2000), pages 133-138) describe an yttrium-stabilised zirconium oxide powder which is obtained by an exothermic redox reaction of nitrate and citrate ions in a nitrate-citrate gel. After grinding, the resulting powder has a particle size of 125 nm and a content of monoclinic zirconium oxide of about 20%. The gel is obtained by dissolving zirconium oxychloride and yttrium oxide in nitric acid, removing the chlorine and then adjusting the pH to 7 with citric acid and ammonium hydroxide. The solution is then heated to from 200 to 250°C on a hot plate. At that temperature, the exothermic reaction between nitrate and citrate ions begins. Carbon-containing impurities are then removed at 350°C over a period of one hour, followed by calcination at 600°C. This process is not very economical and is not suitable for up-scaling.

EP-A-1285881 claims a tetragonal yttrium-zirconium oxide mixed oxide powder which may have a BET surface area of from 1 to 600 m²/g, contains less than 0.05 wt.% chloride and does not exhibit any change to the monoclinic phase during storage at room temperature or during annealing (about 900°C). The mixed oxide powder is prepared by atomising a zirconium oxide precursor and an yttrium oxide precursor together (two-component nozzle) or separately (three-component nozzle) into an oxyhydrogen flame with the aid of a carrier gas. It has been possible to show that, although more homogeneous distribution of the yttrium in the zirconium oxide is found when this two-component nozzle is used, it is not possible to obtain higher BET surface areas and/or a higher content of yttrium oxide (Examples 1 to 3).

The object of the invention is to provide a nano-scale yttrium-stabilised zirconium oxide in which the yttrium is distributed as homogeneously as possible in the zirconium oxide and which, after sintering, exhibits only small amounts of monoclinic zirconium oxide or no monoclinic zirconium oxide.

A further object of the invention is to provide an inexpensive process for the preparation of this powder.

The invention provides a nano-scale yttrium-zirconium mixed oxide powder in the form of aggregated primary particles having the following physico-chemical parameters:
- BET surface area: from 40 to 100 m²/g,
- dₙ = from 3 to 30 nm, dₙ = mean, number-related primary particle diameter,
- yttrium content, calculated as yttrium oxide Y₂O₃, determined by chemical analysis, from 5 to 15 wt.%, based on the mixed oxide powder,
- yttrium contents of individual primary particles, calculated as yttrium oxide Y₂O₃, determined by TEM-EDX, corresponding to the content in the powder ±10%,
- content at room temperature, determined by X-ray diffraction and based on the mixed oxide powder
   - monoclinic zirconium oxide from <1 to 10 wt.%
   - tetragonal zirconium oxide from 10 to 95 wt.%
   - the content of monoclinic zirconium oxide after 2 hours' heating at 1300°C being less than 1 wt.%,
- carbon content less than 0.2 wt.%.

### Evaluation of the X-ray diffraction is carried out according to Rietveld.

More preferably, the BET surface area of the mixed oxide powder according to the invention may be from 45 to 65 m²/g.

It may further be preferable for the mixed oxide powder according to the invention to have a dₙ/dₐ ratio of from 0.5 to 0.9, where dₙ is the mean, number-related primary particle diameter and dₐ is the mean primary particle diameter averaged over the surface.

It may further be preferable for the mixed oxide powder according to the invention to have a mean aggregate diameter that is less than 200 nm.

It may further be preferable for the mixed oxide powder according to the invention to have an OEM surface area/BET surface area ratio that is greater than 1.1. The OEM surface area is given by OEM = 6000/(dₐ x Rho), where dₐ = particle diameter averaged over the surface, Rho = density for zirconium oxide of 6.05 g/cm³. Particular preference may be given to an OEM surface area/BET surface area ratio that is greater than 1.2.

It may further be preferable for the mixed oxide powder according to the invention to have no micropores and for the content of mesopores in the range from 2 to 30 nm to be less than 0.2 ml/g.

The invention further provides a process for the preparation of the mixed oxide powder according to the invention, in which process
- an organic zirconium oxide precursor and an inorganic yttrium oxide precursor, each dissolved in an organic solvent or organic solvent mixture, are mixed according to the subsequently desired ratio of zirconium and yttrium,
- this solution mixture is atomised by means of air (atomising air) or an inert gas and
- is mixed with a gas mixture containing a combustion gas and air (primary air) and is allowed to burn in a flame into a reaction space,
- the hot gases and the solid product are cooled, and then the solid product is separated from the gases,
wherein
- the content of the zirconium oxide precursor in the solution is at least 15 wt.% and not more than 35 wt.%, preferably from 20 to 30 wt.%,
- there is additionally introduced into the reaction space air (secondary air) or an inert gas, in each case in an amount corresponding to from 50% to 150% of the amount of primary air,
- lambda, defined as the ratio of oxygen present from the air used / oxygen necessary for combustion of the combustion gas, is from 2 to 4.5,
- the residence time of the precursors in the flame is from 5 to 30 milliseconds, preferably from 10 to 20 milliseconds, and
- the content of precursor solution in the residual gas amount, which is obtained after combustion of the combustion gas by air, is from 0.003 to 0.006 vol.%, preferably from 0.004 to 0.005 vol.%.

There may advantageously be used as the organic zirconium oxide precursor zirconium(IV) ethanolate, zirconium(IV) n-propanolate, zirconium(IV) isopropanolate, zirconium(IV) n-butanolate, zirconium(IV) tert.-butanolate and/or zirconium(IV) 2-ethylhexanoate.

Zirconium compounds generally contain from 1 to 5 wt.% hafnium compounds. However, zirconium compounds may also be prepared in degrees of purity of 99 wt.% or more.

As the inorganic yttrium oxide precursor there may advantageously be used yttrium nitrate, yttrium chloride, yttrium carbonate and/or yttrium sulfate.

The use of yttrium nitrate tetrahydrate is particularly advantageous.

It is possible in principle to use any organic solvents, provided that the inorganic yttrium oxide precursor and the organic zirconium oxide precursor are soluble therein. Suitable organic solvents are methanol, ethanol, n-propanol, isopropanol, n-butanol, tert.-butanol, 2-propanone, 2-butanone, diethyl ether, tert.-butyl methyl ether, tetrahydrofuran, ethyl acetate, toluene and/or benzine.

The invention relates further to the use of the mixed oxide powder according to the invention as a filler, as a carrier, as a catalytically active substance, in fuel cells, as a dental material, for the preparation of membranes, as an additive in the silicone and rubber industry, for adjusting the rheology of liquid systems, for heat protection stabilisation, in the surface coatings industry, as a colouring pigment.

### Examples:

### Analysis:

BET determined in accordance with DIN 66131

TEM/EDX: Energy Dispersive X-Ray Analysis (EDX)
TEM: Jeol 2070-F; EDX: Noran Voyager 4.2.3

Image analysis: The primary particle and aggregate sizes are determined by image analysis. The image analyses are carried out by means of an H 7500 TEM device from Hitachi and a MegaView II CCD camera from SIS. The image magnification for the evaluation is 30,000:1 with a pixel density of 3.2 nm. The number of particles evaluated is greater than 1000. Preparation is carried out in accordance with ASTM3849-89. The lower threshold limit in respect of detection is 50 pixels.

The content of yttrium oxide and zirconium oxide is determined by X-ray fluorescence analysis and/or chemical analysis.

### Precursor solutions used:

Solution Zr-1: octa-Soligen® zirkonium 18: zirconium octoate corresponding to 25.4 wt.% zirconium oxide, 39.6 wt.% octanoic acid, 3.5 wt.% 2-(2-butoxyethoxy)-ethanol, 31.5 wt.% white spirit.
Solution Zr-2: Tyzor® NPZ: Zirconium tetrapropanolate corresponding to 28.8 wt.% zirconium oxide, 41.2 wt.% tetrapropanolate, 30 wt.% 1-propanol.
Solution Y-1: 30.7 wt.% Y(NO₃)₃*4H₂O, 69.3 wt.% acetone Solution Y-2: 33.8 wt.% Y(NO₃)₃*6H₂O, 66.2 wt.% methanol

### Example 1:

Solution Zr-1 in an amount of 312 g/h (based on zirconium oxide) and solution Y-1 in an amount of 7.0 g/h (based on yttrium oxide) are mixed. The mixture remains stable, no precipitates form.

The mixture, total amount including the solvents 1300 g/h, is then atomised with air (3.5 Nm³/h). The resulting droplets exhibit a droplet size spectrum d₃₀ of from 5 to 15 µm. The droplets are burnt in a flame, formed from hydrogen (1.5 Nm³/h) and primary air (12.0 Nm³/h), into a reaction space. 15.0 Nm³/h of (secondary) air are additionally introduced into the reaction space. The hot gases and the solid products are then cooled in a cooling line. The resulting yttrium-stabilised zirconium oxide is separated off in filters.

### Example 2 is carried out analogously but with components Zr-2 and Y-1. The amounts used are indicated in Table 1.

### Example 3 is carried out analogously to Example 1. The amounts of the substances used are indicated in Table 1.

### Example 4 is carried out analogously to Example 1 but with components Zr-2 and Y-1. The amounts used are indicated in Table 1.

### Examples 5 and 6 are carried out analogously to Example 1 but solutions Zr-2 and Y-2 are fed to the flame separately.

The powders according to the invention of Examples 1 to 4 show a largely similar composition of the primary particles in respect of the components yttrium and zirconium. These values correspond well with those from the powder analysis.

The powders according to the invention of Examples 1 to 4 exhibit a characteristic OEM surface area/BET surface area ratio. This ratio has a higher value, greater than 1.1, compared with the powders of the comparative examples and competitive samples.

The powders from Comparative Examples 5 and 6 exhibit in particular an inhomogeneous distribution of the mixed oxide components compared with the powders according to the invention. Moreover, after heat treatment at 1300°C they still contain distinct amounts of monoclinic zirconium oxide.

**Table 1: Substances and amounts used**

| | | **Examples according to the invention** | | | | **Comparative examples** | |
|---|---|---|---|---|---|---|---|
| **Example** | | **1** | **2** | **3** | **4** | **5** | **6** |
| Solution Zr-1(as ZrO₂) | g/h | 312.0 | - | 326.0 | - | - | - |
| Solution Zr-2(as ZrO₂) | g/h | - | 232.0 | - | 357.0 | 432.0 | 4270 |
| Solution Y-1 (as Y₂O₃) | g/h | 7.0 | 8.5 | 6.8 | 16.1 | - | - |
| Solution Y-2 (as Y₂O₃) | g/h | - | - | - | - | 25.0 | 300 |
| Flow rate | g/h | 1300 | 1000 | 1200 | 1400 | 1500/250^{a)} | 14820/3000^{b)} |
| | 1/h | 1.22 | 1.31 | 1.17 | 1.12 | | |
| Hydrogen | Nm³/h | 3 | 4 | 3.3 | 3.5 | 2 | 35 |
| Atomising air | Nm³/h | 3.5 | 2 | 2 | 2 | 5 | 35 |
| Primary air | Nm³/h | 12 | 10 | 13 | 10 | 10 | 130 |
| Secondary air | Nm³/h | 15 | 15 | 15 | 15 | 20 | 180 |
| Total air | Nm³/h | 30.5 | 27 | 30 | 27 | 35 | 345 |
| Total oxygen | Nm³/h | 6.4 | 5.7 | 6.3 | 5.7 | 7.4 | 72.5 |
| Water formation | l/h | 2.41 | 3.21 | 2.65 | 2.81 | | |
| Reduction in volume | Nm³/h | 4.5 | 6 | 4.95 | 5.25 | | |
| Residual gas amount | Nm³/h | 29 | 25 | 28.35 | 25.25 | | |
| Amount of precursor solution | vol.% | 0.0042 | 0.0052 | 0.0041 | 0.0044 | | |
| lambda | | 4.27 | 2.84 | 3.82 | 3.24 | 7.35 | 4.14 |
| Residence time | ms | 15 | 19 | 19 | 19 | 17 | 8 |

| | | | | | | | |
|---|---|---|---|---|---|---|---|
| a) Flow rate: 1500 g/h Zr-2, 250 g/h Y-2; b)14820 g/h Zr-2, 3000 g/h Y-2; | | | | | | | |

**Table 2: Analytical values of the yttrium-zirconium mixed oxide powders**

| | | **Examples according to the invention** | | | | **Comparative examples** | |
|---|---|---|---|---|---|---|---|
| **Example** | | **1** | **2** | **3** | **4** | **5** | **6** |
| BET surface area | m²/g | 47 | 54 | 60 | 60 | 55 | 60 |
| OEM surface area | m²/g | 58 | 68 | 75 | n.d. | 43 | 48 |
| OEM/BET | | 1.2 | 1.3 | 1.3 | - | 0.8 | 0.8 |
| ∅ primary particle dₙ | nm | 13.7 | 12.4 | 7.6 | n.d. | 13.0 | 12. 2 |
| ∅ primary particle dₐ | nm | 17.1 | 14.5 | 13.2 | n.d. | 21.6 | 19.1 |
| dₙ/ dₐ | | 0.80 | 0.86 | 0.58 | - | 0.60 | 0.64 |
| Mean aggregate diameter | nm | 111 | n.d. | 124 | n.d. | 140 | n.d. |
| Content of ZrO₂ powder | wt.% | 94.6 | 91.5 | 94.3 | 88.5 | 94.6 | 93.5 |
| Content of Y₂O₃ powder | wt.% | 5.4 | 8.5 | 5.7 | 11.5 | 5.4 | 6.5 |
| Content of Y₂O₃ primary particles (TEM/EDX) | wt.% | 5.2 ± 0.4 | 8.2 ± 0.5 | 5.3 ± 0.5 | 11.3 ± 0.5 | 6.1 ± 0.4 | 0.5-4 |
| Monoclinic RT^{d})/2h,1300°C | % | 7.1/0 | 1.0/0 | 7.1/0 | 0.6/0.1 | 15/10 | 60/40 |
| Tetragonal RT/2h, 1300°C | % | 92.9/83.4 | 22.0/55.0 | 92.9/100 | 27/0 | 85/90 | 40/60 |
| Cubic RT/2h, 1300°C | % | 0/16.6 | 67.1/45.2 | 0/0 | 72.4/99.9 | 0/0 | 0/0 |
| Mesopores (2-30 nm) | ml/g | 0.07 | 0.1 | 0.11 | n.d.^{e)} | n.d. | n.d. |
| Carbon content | ppm | 0.12 | 0.14 | 0.09 | 0.17 | 0.18 | n.d. |

| | | | | | | | |
|---|---|---|---|---|---|---|---|
| d) RT = room temperature (23°C); e) n.d. = not determined | | | | | | | |

## Claims

1. Nano-scale yttrium-zirconium mixed oxide powder in the form of aggregated primary particles having the following physico-chemical parameters:
- BET surface area: from 40 to 100 m²/g,
- dₙ = from 3 to 30 nm, dₙ = mean, number-related primary particle diameter,
- yttrium content, calculated as yttrium oxide Y₂O₃, determined by chemical analysis, from 5 to 15 wt.%, based on the mixed oxide powder,
- yttrium contents of individual primary particles, calculated as yttrium oxide Y₂O₃, determined by TEM-EDX, corresponding to the content in the powder ±10%,
- content at room temperature, determined by X-ray diffraction and based on the mixed oxide powder
- monoclinic zirconium oxide from <1 to 10 wt.%
- tetragonal zirconium oxide from 10 to 95 wt.%
- the content of monoclinic zirconium oxide after 2 hours' heating at 1300°C being less than 1 wt.%,
- carbon content less than 0.2 wt.%.

2. Nano-scale yttrium-zirconium mixed oxide powder according to claim 1, **characterised in that** the BET surface area is from 45 to 65 m²/g.

3. Nano-scale yttrium-zirconium mixed oxide powder according to claim 1 or 2, **characterised in that** dₙ/dₐ = from 0.5 to 0.9, where dₙ = mean, number-related primary particle diameter and dₐ = mean primary particle diameter averaged over the surface.

4. Nano-scale yttrium-zirconium mixed oxide powder according to claims 1 to 3, **characterised in that** the mean aggregate diameter is less than 200 nm.

5. Nano-scale yttrium-zirconium mixed oxide powder according to claims 1 to 4, **characterised in that** the OEM surface area/BET surface area ratio is > 1.1, the OEM surface area being given by OEM = 6000/(dₐ x Rho), where dₐ = primary particle diameter averaged over the surface, Rho = density for zirconium oxide of 6.05 g/cm³_{.}

6. Nano-scale yttrium-zirconium mixed oxide powder according to claims 1 to 5, **characterised in that** it has no micropores and the content of mesopores in the range from 2 to 30 nm is less than 0.2 ml/g.

7. Process for the preparation of the nano-scale yttrium-zirconium mixed oxide powder according to claims 1 to 6, **characterised in that**
- an organic zirconium oxide precursor and an inorganic yttrium oxide precursor, each dissolved in an organic solvent or organic solvent mixture, are mixed according to the subsequently desired ratio of zirconium and yttrium,
- this solution mixture is atomised by means of air (atomising air) or an inert gas and
- is mixed with a combustion gas and air (primary air), and the mixture is allowed to burn in a flame into a reaction space,
- the hot gases and the solid product are cooled, and then the solid product is separated from the gases,
wherein
- the content of the zirconium oxide precursor, calculated as ZrO₂, in the solution is at least 15 wt.% and not more than 35 wt.%,
- there is additionally introduced into the reaction space air (secondary air) or an inert gas, in each case in an amount corresponding to from 50% to 150% of the amount of primary air,
- lambda, defined as the ratio of oxygen present from the air used / oxygen necessary for combustion of the combustion gas, is from 2 to 4.5,
- the residence time of the precursors in the flame is from 5 to 30 milliseconds, and
- the content of precursor solution in the amount of gas obtained after combustion of the combustion gas by air is from 0.003 to 0.006 vol.%,

8. Process according to claim 7, **characterised in that** the organic zirconium oxide precursor is selected from the group comprising zirconium(IV) ethanolate, zirconium(IV) n-propanolate, zirconium(IV) isopropanolate, zirconium(IV) n-butanolate, zirconium(IV) tert.-butanolate and/or zirconium(IV) 2-ethylhexanoate.

9. Process according to claim 7 or 8, **characterised in that** the inorganic yttrium oxide precursor is selected from the group comprising yttrium nitrate, yttrium chloride, yttrium carbonate and/or yttrium sulfate.

10. Process according to claims 7 to 9, **characterised in that** the organic solvent is methanol, ethanol, n-propanol, isopropanol, n-butanol, tert.-butanol, 2-propanone, 2-butanone, diethyl ether, tert.-butyl methyl ether, tetrahydrofuran, ethyl acetate, toluene and/or benzine.

11. Use of the nano-scale yttrium-zirconium mixed oxide powder according to claims 1 to 6 as a filler, as a carrier, as a catalytically active substance, in fuel cells, as a dental material, for the preparation of membranes, as an additive in the silicone and rubber industry, for adjusting the rheology of liquid systems, for heat protection stabilisation, in the surface coatings industry, as a colouring pigment.

## Patentansprüche

1. Nanoskaliges Yttrium-Zirkon-Mischoxidpulver in Form von aggregierten Primärpartikeln mit folgenden physikalischchemischen Parametern:
- BET-Oberfläche: 40 bis 100 m²/g,
- dₙ = 3 bis 30 nm, dₙ= mittlerer, anzahlbezogener Primärpartikeldurchmesser,
- Gehalt an Yttrium, gerechnet als Yttriumoxid Y₂O₃, bestimmt durch chemische Analyse, von 5 bis 15 Gew.-%, bezogen auf das Mischoxidpulver,
- Gehalte an Yttrium einzelner Primärpartikel, gerechnet als Yttriumoxid Y₂O₃, bestimmt durch TEM-EDX, entsprechend dem Gehalt im Pulver ±10%,
- Gehalt bei Raumtemperatur, bestimmt durch Röntgenbeugung und bezogen auf das Mischoxidpulver
- monoklines Zirkonoxid <1 bis 10 Gew.-%
- tetragonales Zirkonoxid 10 bis 95 Gew.-%
- wobei der Gehalt an monoklinem Zirkonoxid nach zweistündigem Erhitzen auf 1300°C kleiner 1 Gew.-% ist,
- Gehalt an Kohlenstoff kleiner 0,2 Gew.-%.

2. Nanoskaliges Yttrium-Zirkon-Mischoxidpulver nach Anspruch 1, **dadurch gekennzeichnet, dass** die BET-Oberfläche 45 bis 65 m²/g ist.

3. Nanoskaliges Yttrium-Zirkon-Mischoxidpulver nach den Ansprüchen 1 oder 2, **dadurch gekennzeichnet, dass** dₙ/dₐ = 0,5 bis 0,9 ist, mit dₙ = mittlerer, anzahlbezogener Primärpartikeldurchmesser und dₐ = mittlerer, über die Oberfläche gemittelter Primärpartikeldurchmesser.

4. Nanoskaliges Yttrium-Zirkon-Mischoxidpulver nach den Ansprüchen 1 bis 3, **dadurch gekennzeichnet, dass** der mittlere Aggregatdurchmesser kleiner als 200 nm ist.

5. Nanoskaliges Yttrium-Zirkon-Mischoxidpulver nach den Ansprüchen 1 bis 4, **dadurch gekennzeichnet, dass** das Verhältnis OEM-Oberfläche/BET-Oberfläche > 1,1 ist, wobei sich die OEM-Oberfläche ergibt aus OEM = 6000/(dₐ x Rho) mit dₐ = Primärpartikeldurchmesser, über die Oberfläche gemittelt, Rho = Dichte für Zirkonoxid von 6,05 g/cm³_{.}

6. Nanoskaliges Yttrium-Zirkon-Mischoxidpulver nach den Ansprüchen 1 bis 5, **dadurch gekennzeichnet, dass** es keine Mikroporen aufweist und der Anteil an Mesoporen im Bereich von 2 bis 30 nm kleiner als 0,2 ml/g ist.

7. Verfahren zur Herstellung des nanoskaligen Yttrium-Zirkon-Mischoxidpulvers gemäss den Ansprüchen 1 bis 6, **dadurch gekennzeichnet, dass**
- man einen organischen Zirkonoxidprecursor und einen anorganischen Yttriumoxidprecursor, jeweils gelöst in einem organischen Lösungsmittel oder organischen Lösungsmittelgemisch, entsprechend dem später gewünschten Verhältnis von Zirkon und Yttrium, vermischt,
- dieses Lösungsgemisch mittels Luft (Verdüsungsluft) oder eines inerten Gases zerstäubt und
- mit einem Brenngas und Luft (Primärluft) vermischt und das Gemisch in einer Flamme in einen Reaktionsraum hinein verbrennen lässt,
- die heissen Gase und das feste Produkt kühlt und anschliessend das feste Produkt von den Gasen abtrennt, wobei
- der Gehalt des Zirkonoxidprecursors, gerechnet als ZrO₂, in der Lösung wenigstens 15 Gew.-% und nicht mehr als 35 Gew.-% beträgt,
- man zusätzlich Luft (Sekundärluft) oder ein inertes Gas, jeweils in einer Menge, die 50% bis 150% der Primärluftmenge entspricht, in den Reaktionsraum einbringt,
- Lambda, definiert als das Verhältnis vorhandener Sauerstoff aus der eingesetzten Luft/zur Verbrennung des Brenngases notwendiger Sauerstoff, 2 bis 4,5 beträgt,
- die Verweilzeit der Precursoren in der Flamme 5 bis 30 Millisekunden ist und
- der Anteil an Precursor-Lösung in der Gasmenge, die sich nach der Verbrennung des Brenngases durch Luft ergibt, 0,003 bis 0,006 Vol-% ist.

8. Verfahren nach Anspruch 7, **dadurch gekennzeichnet, dass** der organische Zirkonoxidprecursor ausgewählt wird aus der Gruppe umfassend Zirkon(IV)-ethylat, Zirkon(IV)-n-propylat, Zirkon(IV)-iso-propylat, Zirkon(IV)-n-butylat, Zirkon(IV)-tert.-butylat und/oder Zirkon(IV)-2-ethyl-hexanoat.

9. Verfahren nach den Ansprüchen 7 oder 8, **dadurch gekennzeichnet, dass** der anorganische Yttriumoxidprecursor ausgewählt wird aus der Gruppe umfassend Yttriumnitrat, Yttriumchlorid, Yttriumcarbonat und/oder Yttriumsulfat.

10. Verfahren nach den Ansprüchen 7 bis 9, **dadurch gekennzeichnet, dass** das organische Lösungsmittel Methanol, Ethanol, n-Propanol, iso-Propanol, n-Butanol, tert.-Butanol, 2-Propanon, 2-Butanon, Diethylether, tert.-Butyl-methylether, Tetrahydrofuran, Essigsäureethylester, Toluol und/oder Benzin ist.

11. Verwendung des nanoskaligen Yttrium-Zirkon-Mischoxidpulvers gemäss den Ansprüchen 1 bis 6 als Füllstoff, als Trägermaterial, als katalytisch aktive Substanz, in Brennstoffzellen, als Dentalwerkstoff, zur Herstellung von Membranen, als Additiv in der Silikon-und Kautschukindustrie, zur Einstellung der Rheologie von flüssigen Systemen, zur Hitzeschutzstabilisierung, in der Lackindustrie, als Farbpigment.

## Revendications

1. Poudre d'oxyde mixte yttrium-zirconium à l'échelle nanométrique sous la forme de particules primaires agrégées présentant les paramètres physico-chimiques suivants :
- aire de surface BET : de 40 à 100 m²/g,
- dₙ = de 3 à 30 nm, dₙ = diamètre de particule primaire moyen, relatif au nombre,
- teneur en yttrium, calculée en tant qu'oxyde d'yttrium Y₂O₃, déterminée par analyse chimique, de 5 à 15 % en poids, par rapport à la poudre d'oxyde mixte,
- teneurs en yttrium des particules primaires individuelles, calculées en tant qu'oxyde d'yttrium Y₂O₃, déterminée par TEM-EDX, correspondant à la teneur dans la poudre ± 10 %,
- teneur à température ambiante, déterminée par diffraction de rayons X et par rapport à la poudre d'oxyde mixte
- oxyde de zirconium monoclinique de < 1 à 10 % en poids,
- oxyde de zirconium tétragonal de 10 à 95 % en poids,
- la teneur en oxyde de zirconium monoclinique après 2 heures de chauffage à 1 300 °C étant inférieure à 1 % en poids,
- teneur en carbone inférieure à 0,2 % en poids.

2. Poudre d'oxyde mixte yttrium-zirconium à l'échelle nanométrique selon la revendication 1, **caractérisée en ce que** l'aire de surface BET est de 45 à 65 m²/g.

3. Poudre d'oxyde mixte yttrium-zirconium à l'échelle nanométrique selon la revendication 1 ou 2, **caractérisée en ce que** dₙ/dₐ = de 0,5 à 0, 9, avec dₙ = diamètre de particule primaire moyen, relatif au nombre, et dₐ = diamètre de particule primaire moyen moyenné sur la surface.

4. Poudre d'oxyde mixte yttrium-zirconium à l'échelle nanométrique selon les revendications 1 à 3, **caractérisée en ce que** le diamètre d'agrégat moyen est inférieur à 200 nm.

5. Poudre d'oxyde mixte yttrium-zirconium à l'échelle nanométrique selon les revendications 1 à 4, **caractérisée en ce que** le rapport aire de surface OEM/aire de surface BET est > 1,1, l'aire de surface OEM étant donnée par OEM = 6000/ (dₐ x Rho), avec dₐ = diamètre de particule primaire moyenné sur la surface, Rho = densité pour l'oxyde de zirconium de 6,05 g/cm³.

6. Poudre d'oxyde mixte yttrium-zirconium à l'échelle nanométrique selon les revendications 1 à 5, **caractérisée en ce qu'**elle ne comprend pas de micropores et **en ce que** la teneur en mésopores dans la plage allant de 2 à 30 nm est inférieure à 0,2 ml/g.

7. Procédé de préparation de la poudre d'oxyde mixte yttrium-zirconium à l'échelle nanométrique selon les revendications 1 à 6, **caractérisé en ce que**
- un précurseur d'oxyde de zirconium organique et un précurseur d'oxyde d'yttrium inorganique, chacun dissous dans un solvant organique ou un mélange de solvants organiques, sont mélangés selon le rapport ultérieurement souhaité entre le zirconium et l'yttrium,
- ce mélange de solutions est atomisé au moyen d'air (air d'atomisation) ou d'un gaz inerte, et
- est mélangé avec un gaz de combustion et de l'air (air primaire), et le mélange est laissé brûler dans une flamme dans un espace de réaction,
- les gaz chauds et le produit solide sont refroidis, puis le produit solide est séparé des gaz,
- la teneur du précurseur d'oxyde de zirconium, calculé en tant que ZrO₂, dans la solution étant d'au moins 15 % en poids et d'au plus 35 % en poids,
- de l'air (air secondaire) ou un gaz inerte étant également introduit dans l'espace de réaction, dans chaque cas en une quantité correspondant à de Xl'équivalent 50 % à 150 % de la quantité d'air primaire,
- lambda, défini comme le rapport oxygène présent à partir de l'air utilisé/oxygène nécessaire à la combustion du gaz de combustion, étant de 2 à 4,5,
- le temps de séjour des précurseurs dans la flamme étant de 5 à 30 millisecondes, et
- la teneur de la solution de précurseurs dans la quantité de gaz obtenue après la combustion du gaz de combustion par l'air étant de 0,003 à 0,006 % en volume.

8. Procédé selon la revendication 7, **caractérisé en ce que** le précurseur d'oxyde de zirconium organique est choisi dans le groupe comprenant l'éthanolate de zirconium (IV), le n-propanolate de zirconium (IV), l'isopropanolate de zirconium (IV), le n-butanolate de zirconium (IV), le tert.-butanolate de zirconium (IV) et/ou le 2-éthylhexanoate de zirconium (IV).

9. Procédé selon la revendication 7 ou 8, **caractérisé en ce que** le précurseur d'oxyde d'yttrium inorganique est choisi dans le groupe comprenant le nitrate d'yttrium, le chlorure d'yttrium, le carbonate d'yttrium et/ou le sulfate d'yttrium.

10. Procédé selon les revendications 7 à 9, **caractérisé en ce que** le solvant organique est le méthanol, l'éthanol, le n-propanol, l'isopropanol, le n-butanol, le tert.-butanol, la 2-propanone, la 2-butanone, l'éther de diéthyle, l'éther de méthyle et de tert.-butyle, le tétrahydrofurane, l'acétate d'éthyle, le toluène et/ou la benzine.

11. Utilisation de la poudre d'oxyde mixte yttrium-zirconium à l'échelle nanométrique selon les revendications 1 à 6 en tant que charge, en tant que support, en tant que substance catalytiquement active, dans des piles à combustible, en tant que matériau dentaire, pour la préparation de membranes, en tant qu'additif dans l'industrie de la silicone et du caoutchouc, pour ajuster la rhéologie de systèmes liquides, pour la stabilisation d'une protection contre la chaleur, dans l'industrie des revêtements de surface, en tant que pigment colorant.
